# EUROPEAN PATENT APPLICATION

(11) **EP 4 707 589 A1**
(43) Date of publication of application: **11.03.2026**
(21) Application number: 24799964.2
(22) Date of filing: 02.05.2024
(51) Int. Cl.: F03G 1/00, F03G 7/00

(54) **ENERGY STORAGE DEVICE**

(30) Priority: 03.05.2023 CO 23005696
(71) Applicant: Bendek Ahumada, Nelson, Bogotá, 110311 (CO); Bendek Martinez, Samuel Eduardo, Bogotá (CO)
(72) Inventor: Bendek Ahumada, Nelson, Bogotá, 110311 (CO); Bendek Martinez, Samuel Eduardo, Bogotá (CO)
(74) Representative: Isern Patentes y Marcas S.L.
(86) International application number: PCT/IB2024/054267
(87) International publication number: WO 2024/228146

(57) **Abstract**

The present invention relates to an energy storage device, specifically an elastic energy-based device for storing electrical energy. The device allows energy derived from an electrical energy source to be converted into elastic potential energy, the latter being produced and stored by means of the deformation of an elastic element, allowing maximum use to be made of the elastic capacities of the element, thereby maximising the energy stored per unit of volume. In addition, the stored elastic potential energy can be recovered when the elastic element resumes its original shape. The disclosed device comprises a generator motor that allows said energy to be converted into usable electrical energy.

## Description

### TECHNICAL FIELD

The present disclosure is related to devices for storing energy. In particular, the present disclosure relates to an electrical energy storage device based on elastic energy, which allows storing and using electrical energy in an affordable, efficient, and sustainable manner.

### DESCRIPTION OF THE STATE OF THE ART

The current dependence on fossil fuels is a global problem. Most industries and transportation systems worldwide depend on fossil fuels, such as oil, natural gas, and coal, for their operation. However, the inventory of these fuels is finite, and their exploitation and consumption have a negative impact on the environment, especially in terms of greenhouse gas emissions, which are the main cause of global warming.

To address this global problem, solutions have been developed that, on the one hand, try to increase the planet's capacity to capture CO2 and, on the other hand, a migration to energy production using renewable sources, such as solar, wind, hydraulic, and geothermal energy, among others, has occurred. These energy sources have a much lower environmental impact than fossil fuels, which contributes to reducing CO2 emissions.

However, one of the main limitations of renewable energy sources is that their production is intermittent and variable, which makes their integration into the electrical grid difficult. In order to overcome the drawbacks caused by this intermittency, different types of energy storage devices can be used. In general terms, said energy storage devices are configured to transform a certain form of energy into another that can be accumulated and, subsequently, used on demand.

In the current state of the art, several strategies are known for storing energy, for example, by accumulating chemical, thermal, kinetic, or potential energy. Particularly, potential energy storage refers to the storage of energy in the form of gravitational potential energy or elastic potential energy.

In the case of the gravitational potential energy storage strategy, energy is stored in the form of lifting heavy objects, ranging from low-scale systems, such as the use of weights and pulleys, to high-scale systems, such as the construction of hydroelectric dams.

For its part, the elastic potential energy storage strategy is based on the deformation of elastic materials such as springs or rubbers, which, when compressed or stretched, store elastic potential energy inside. This energy is released when an external force is no longer applied to the elastic material, causing the material to return to its original state, thus releasing the stored energy in the form of work. This latter strategy provides several advantages over its gravitational potential energy storage counterpart, as it allows for a reduction in both infrastructure investment and the space required for its installation. Furthermore, in the case where an elastic material such as natural rubber is used, not only is greater efficiency achieved, but it also contributes to increasing CO2 uptake on the planet, because its production process involves rubber plantations that help fix carbon from the atmosphere.

Currently, energy storage systems based on elastic potential energy can be found, among which systems using elastomers as elastic material stand out, such as those disclosed in patent documents US5655617A, and US4441466A.

In particular, document US5655617A describes a system that uses a pre-stretched elastomer as an elastic material to store energy in the form of elastic energy for its subsequent use as motive power.

The system disclosed in US5655617A comprises an elastomeric member which may be of multiple strands, disposed on a plurality of compensated pulleys mounted on a pair of parallelly disposed support shafts, as well as a control means, such as a microprocessor, which can be used to control the storage of kinetic energy, by winding a low-stretch member on an absorption reel to linearly stretch the elastomeric member and release the stored energy by allowing the elastomeric member to cause the low-stretch member to unwind onto a take-up reel.

For its part, document US4441466A describes an apparatus that generates, stores, and releases mechanical energy to drive the shaft of a motor. The apparatus comprises a mechanical energy accumulator, and a starter motor for an internal combustion engine which is driven by the energy of the accumulator. The energy is stored by elastomeric, elastically extensible elements, wound around supports arranged along the generatrices of a cylindrical member.

In addition to applications where the stored elastic potential energy is transformed into kinetic motive energy, as disclosed in the aforementioned documents, an energy storage device can use the stored elastic potential energy to be transformed into electrical energy, thus, it can be configured as an alternative to the use of chemical storage systems, such as lithium or lead-acid batteries; kinetic storage systems, such as flywheels; gravitational storage systems, such as hydroelectric plants, among others.

### BRIEF DESCRIPTION

The present technological development relates to a device for storing energy, which makes use of elastic energy as a storage medium. The device comprises a structure; a shaft coupled to the structure; an elastic element connected at a first end to the structure and at a second end to the shaft, said elastic element is configured to be wound on the shaft. The device also comprises a motor-generator coupled to the shaft and configured to rotate integrally with said shaft. This allows deforming the elastic element when the motor-generator is used as a motor, by winding it on said shaft; and, when the motor-generator is used as a generator, to generate energy at the moment the elastic element recovers its initial shape and releases its elastic energy by generating a rotational movement on the shaft. Also, the device comprises a braking mechanism, disposed between the shaft and the structure, in physical contact with the elastic element, which allows controlling the deformation process of the elastic element to maximize the elastic potential energy that is stored.

### BRIEF DESCRIPTION OF THE FIGURES

FIG. 1 shows an isometric view of an embodiment of the energy storage device comprising a structure, an elastic element, a shaft, a braking mechanism, and a motor-generator.
FIG. 2 shows a front isometric view of a preferred embodiment of the device for storing energy comprising a plurality of elastic elements, a plurality of guide discs, a shaft, a braking mechanism, a plurality of transmissions, and a motor-generator.
FIG. 3 shows a rear isometric view of an embodiment of the device for storing energy comprising a plurality of elastic elements, a plurality of support shafts, a shaft, a braking mechanism, a locking element, a plurality of transmissions, and a motor-generator.
FIG. 4 shows a detailed isometric view of an embodiment of the device comprising a plurality of elastic elements and a plurality of support shafts, said support shafts comprising a plurality of independent shafts.
FIG. 5 shows a connection diagram of the computing unit and the revolution, elongation, and voltage and current sensors.
FIG.6 shows a front isometric view of an embodiment of the device for storing energy comprising a structure with a shaft disposed between its ends on which an elastic element is wound.

### DETAILED DESCRIPTION

The present disclosure corresponds to a device for storing energy, particularly an electrical energy storage device based on elastic energy.

For the understanding of the present disclosure, the expression "elastic element" refers to a mechanical component that has the ability to deform temporarily when an external load or force is applied to it, but returns to its original shape once said load or force is removed. The expression "elastic potential energy" is used to refer to the energy stored in an elastic element due to its deformation, and can be calculated using Hooke's law. When the force causing the deformation is released, the elastic potential energy is converted into kinetic energy. The expression "electrical energy source" is used to refer to any type of natural or technological resource used to generate electricity, such as fossil fuels, nuclear energy, hydraulic energy, wind energy, solar energy, geothermal energy, among other resources known to a person of ordinary skill in the art. The term "elongation" refers to the amount of deformation that a material experiences when subjected to an external force, such as tension.

Taking the above into account, the device of the present disclosure is configured to optimize the process of storing and converting elastic potential energy, allowing to make the most of the elastic capacities of an elastic element, thus maximizing the energy stored per unit of volume. This process is achieved during a charging stage, where an electrical energy source is used to actuate a mechanism that allows deforming an elastic element; and a discharge phase, where the kinetic energy released by the elastic element is used to generate electrical energy.

The capacity of an elastic element to store elastic potential energy is characterized by Hooke's law, which states that the force applied to an elastic element is proportional to its elongation and the cross-sectional area of the same, and the elastic potential energy that an elastic element can store, due to its deformation, is proportional to its volume and the square of its elongation. It can be deduced from this law that the energy storage capacity of an elastic element depends on its elongation capacity. In the same way, if elastic elements of identical lengths are considered, the greater its volume, the greater the capacity of said elastic element to store energy, however, when the elastic element has a greater volume, it may also have a greater cross-sectional area, and, therefore, the force necessary to deform it is greater.

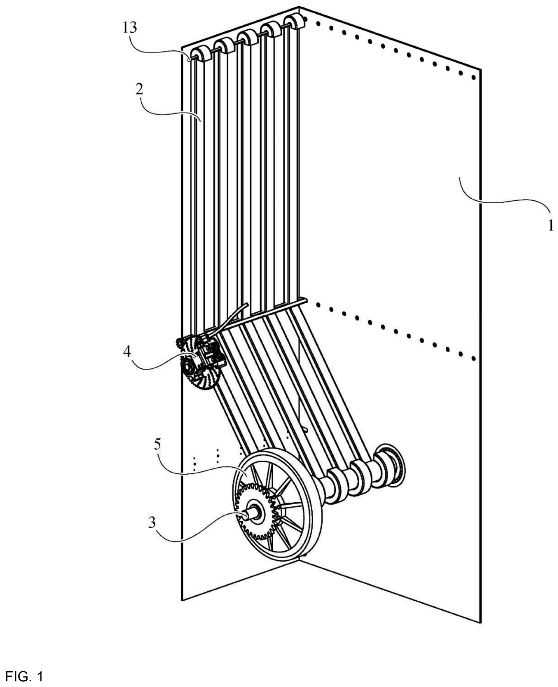

Referring to FIG. 1, the device of the present disclosure comprises a structure (1); an elastic element (2) with a first and second end, where the first end is connected to the structure (1); a shaft (3) coupled to the structure (1), where said shaft (3) is connected to the second end of the elastic element (2), and is configured to rotate and wind or unwind said elastic element (2). The device of the present disclosure also comprises a braking mechanism (4) disposed between the shaft (3) and the structure (1), and in physical contact with the elastic element (2); and a motor-generator (5) connected to the shaft (3), and configured to rotate integrally with said shaft (3).

Particularly, the structure (1) allows protecting and supporting the mechanisms of the storage device in a safe and stable manner. Said structure (1) can be formed by plates, sheets or flats, bars or profiles with a cross- section in the shape of an I, C-shape, T-shape, O-shape, profiles with a cross-section with a shape selected from the group consisting of squares, triangles, circles, rectangles, pentagons, trapezoids, ellipses, rhombuses, hexagons, heptagons, octagons, decagons and a combination of the foregoing.

For its part, the elastic element (2) can be an elastomer based on a material that is selected from the group consisting of natural rubber, synthetic rubber, polyisoprene, polybutadiene, styrene-butadiene, butyl, nitrile, neoprene, ethylene-propylene, ethylene-propylene-diene, ethylene-vinyl acetate, fluorinated polyethylene, chlorinated polyethylene, chlorosulfonated polyethylene, polyether block amide (PEBA), copolyester polyamide, epichlorohydrin, silicone, polyurethane, polysulfide, elastic compounds with graphene, elastic compounds with nanoparticles, or a combination of the foregoing.

Additionally, the elastic element (2) can be an element selected from the group consisting of an elastic block, elastic cord, elastic balloon, or elastic band.

According to an embodiment of the present disclosure, the elastic element (2) is an elastic band of a material based on natural rubber, which allows the elastic element (2) to be wound on the shaft (3). When the motor- generator (5) is configured to function as a motor, which is a charging stage, the elastic element (2) is wound on the shaft (3), whose rotational movement is driven by the motor-generator (5) configured to function as a motor. As the elastic element (2) is wound around the shaft (3), its state of deformation is elongation or stretching. When the force exerted by the motor-generator (5), configured as a motor, is released, the elastic element (2) begins to recover its original shape, which causes the shaft (3) to rotate in a direction opposite to the direction in which the elastic element (2) was wound, because the elastic element (2) unwinds on said shaft (3). When the elastic element (2) begins to unwind, the motor-generator (5) is configured as a generator and transforms the kinetic energy, produced by the rotation of the shaft (3), into usable electrical energy, configuring a discharge stage.

According to the previous embodiment, said elastic band can have a length between 5 m and 5000 m, depending on the amount of energy that needs to be stored and the required generation power. In one embodiment of the present disclosure, the length of the elastic element (2) is between 5 m and 10 m, between 10 m and 50 m, between 10 m and 100 m, between 100 m and 500 m, between 500 m and 1000 m, between 1000 m and 5000 m. In another embodiment, in which the device is configured to meet the need for energy production in civil works, the length of the elastic element (2) is up to 5000 m.

The shape of the cross-section of the elastic band is selected from the group consisting of a circle, triangle, rectangle, pentagon, trapezoid, ellipse, rhombus, hexagon, heptagon, octagon, decagon, equivalent shapes known to a person of ordinary skill in the art, or a combination of the foregoing. The elastic band may have a twist, that is, the band may be wound on itself, or comprise a plurality of wound strands, to form a cord-like structure. By having said twist, the elastic band can store more energy than a band without a twist, because said twist generates an additional tension on said band.

In a preferred embodiment, the elastic element (2) is an elastic band with a square cross-section without twisting. This configuration allows minimizing structural damage to the elastic element (2), compared to a twisted elastic band, which allows extending the useful life of the elastic element (2).

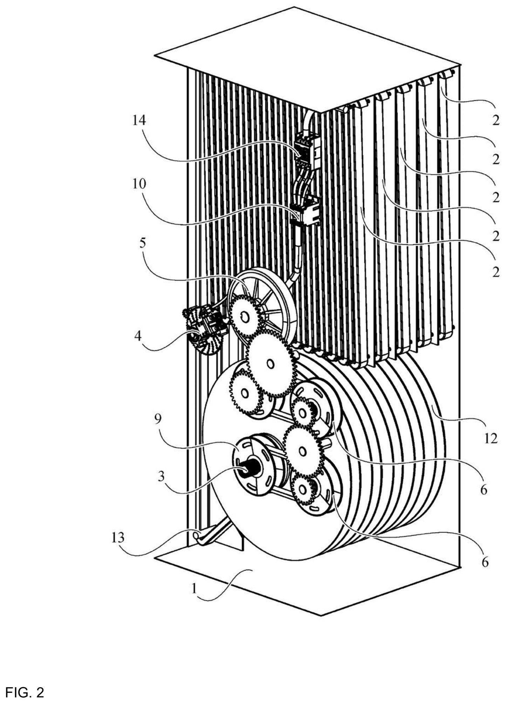

According to FIGS. 1 and 2, in one embodiment the device comprises more than one elastic element (2), located one next to the other; said plurality of elastic elements (2) are connected at a first end to the structure (1), and at a second end to the shaft (3). With respect to the embodiment that uses a single elastic element (2), this configuration allows for a greater energy storage capacity, this is because by using more than one elastic element
(2) in parallel to store energy, a greater density of energy storage per unit volume can be obtained.

The foregoing also allows for a greater degree of redundancy in the energy storage system, since, if one of the elastic elements (2) fails, the other elastic elements (2) can continue to function, which increases the reliability of the system as a whole. In addition, the distribution of the stored energy can be done in several areas, which allows for greater flexibility in the application of the stored energy.

According to FIG. 2, and in an embodiment of the present disclosure where the storage device comprises a plurality of elastic elements (2), a plurality of guide discs (12) can be fixed on the shaft (3). Said guide discs (12) can be arranged orthogonally to the shaft (3), and distributed concentrically and equidistantly along it. In this way, independent winding lanes are formed for each of the plurality of elastic elements (2). This configuration allows each of the plurality of elastic elements (2) to remain aligned during the charging and discharging stages of the device. Additionally, this configuration allows reducing the friction caused by unwanted rubbing between the different elastic elements (2).

In one embodiment of the present disclosure, the device may have a braking mechanism (4) disposed between the shaft (3) and the structure (1). Said braking mechanism (4) is in physical contact with the elastic element (2). This configuration allows controlling the elongation of the elastic element (2) as it is wound on the shaft (3), the foregoing is possible because said braking mechanism (4) opposes in a controlled manner the displacement of the elastic element (2) at the point of contact between the elastic element (2) and the braking mechanism (4), so that, from said point, the section of the elastic element (2) that is being elongated reaches its maximum elongation when wound on the shaft (3). In this way, it is allowed that said elastic element (2) is at a maximum elongation along its entire length without suffering any type of rupture and a maximum energy storage capacity is achieved in the device. Without this braking mechanism (4) the elastic element (2) would elongate little at the beginning of the process and a lot at the end, putting at risk the integrity of the elastic element (2) and storing a smaller amount of energy.

Additionally, according to the embodiment in which the device comprises a plurality of elastic elements (2), said elastic elements (2), when wound on the same shaft (3), can be elongated differently, even if the applied force is the same, which is caused by small variations in the construction of the elastic elements (2). To avoid this undesirable effect, each of said elastic elements (2) can be in contact with an independent braking mechanism (4), this configuration allows the elongation of each elastic element (2) to be controlled individually.

In another embodiment of the present disclosure, between the shaft (3) and the motor-generator (5) a transmission (6) is disposed which comprises a first coupling point connected to a gear (7) disposed on the shaft (3), and a second coupling point disposed on the motor-generator (5). Said transmission (6) is configured to modify the gear ratio between the shaft (3) and the motor-generator (5), that is, to control the rotation speed of the shaft (3) with respect to the motor-generator (5). When the motor-generator (5) is configured as a motor, this configuration controls the rotation speed of the shaft (3) to achieve the most optimal energy storage possible and when the motor-generator (5) is configured as a generator. This configuration controls the speed of the motor-generator (5) to deliver the required electrical power, regardless of the elongation of the elastic element
(2) at a given moment.

In a preferred embodiment of the present disclosure, the transmission (6) is a continuously variable transmission (CVT). For the understanding of the present disclosure, the term "continuously variable transmission (CVT)" refers to a type of automatic transmission that can continuously change the transmission ratio smoothly and without fixed steps. Said CVT uses a drive pulley and a driven pulley connected by a belt or chain. The position of said pulleys is continuously adjusted to provide a certain gear ratio. This configuration allows for a continuous change in the gear ratio between the shaft (3) and the motor-generator (5), unlike the use of a limited set of fixed gears, which allows for greater performance in acceleration. This effect is achieved because the variations in the gear ratios are smooth and continuous, which prevents peaks from being generated in the motor-generator (5), or excessive tensions in the elastic element (2), which are caused when there are sudden changes in the speed of rotation.

In yet another embodiment of the present disclosure, and according to FIG. 2, between the shaft (3) and the motor-generator (5) one or more transmissions (6) are arranged in series. This configuration allows for control over a higher range of torque and speed of rotation of the motor-generator (5), which allows for handling a wide range of elongation on the elastic elements (2), without the need to excessively increase the size of the pulleys of the transmission (6).

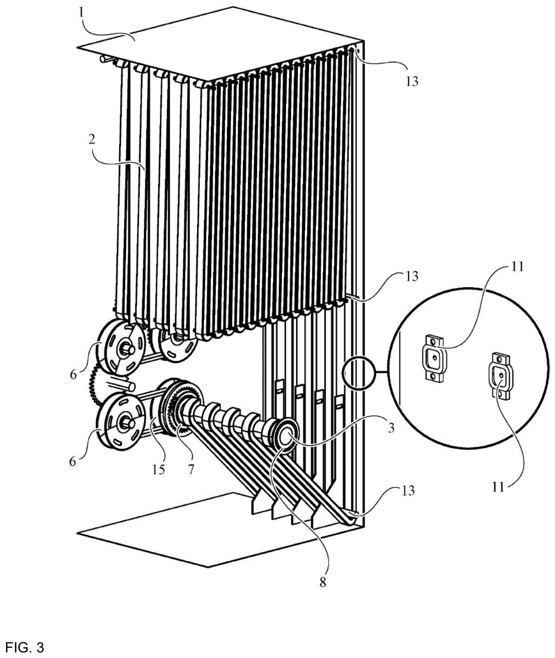

Referring to FIG. 3, in an embodiment of the present disclosure, the shaft (3) is connected to a locking element (8), such as a ratchet, where said locking element (8) is configured to prevent the rotation of the shaft (3). This configuration allows maintaining the state of elongation of the elastic element (2) safely and without the need to apply an additional external force on said shaft (3). Additionally, this locking element (8) allows the elastic energy to be stored for as long as necessary, without consuming energy in the locking process.

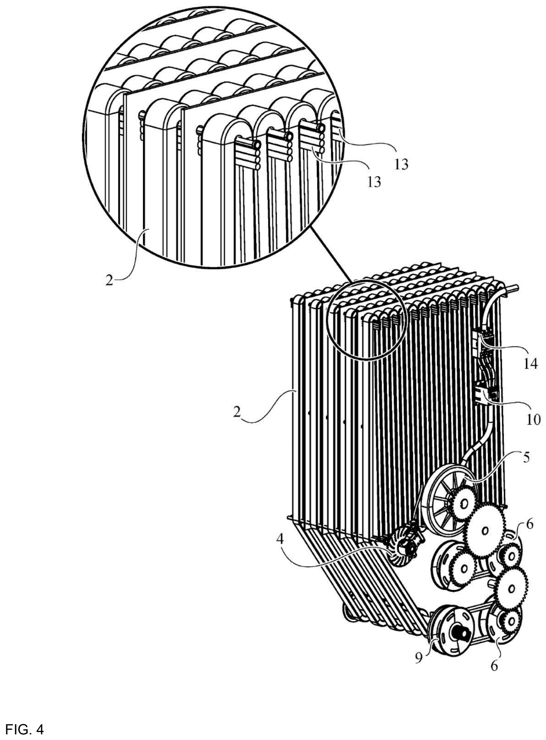

Referring to FIGS. 3 and 4, in an embodiment of the present disclosure, a plurality of support shafts (13) are arranged on the structure (1), which may comprise at least one bushing or a bearing, which allows said shafts to rotate. Said support shafts (13) are in contact with the elastic element (2) and allow reorienting its direction of travel.

For example, and with reference to FIG. 3, the plurality of support shafts (13) can be distributed parallel to each other on the structure (1). The elastic element (2), when supported on one of the support shafts (13), can change direction according to the location of each of said support shafts (13), that is, each support shaft (13) can deflect the path of the elastic element (2) between 1° and 360°, which allows each elastic element (13) to be folded over said plurality of support shafts (13) while they are wound or unwound on the shaft (3). This configuration allows incorporating an elastic element (2) of greater length in a given space, by changing the direction of said elastic element (2) and allowing it to be distributed in a smaller space, thus, the amount of energy that can be stored in the device is increased by allowing the use of an elastic element (2) of greater length, and therefore a greater volume, in a smaller space.

In one embodiment of the present disclosure, there may be a plurality of elastic elements (2) and a plurality of support shafts (13) distributed parallel to each other on the structure (1), which allows obtaining a greater energy storage capacity per unit of volume, compared to the embodiment that does not include a plurality of elastic elements (2). This is because by having a plurality of elastic elements (2), the force exerted on said support shafts (13) is distributed, so it is possible to reduce the diameter of the support shafts (13), allowing the use of an elastic element (2) of even greater length, and therefore a greater volume, which results in a greater energy storage capacity per unit of volume.

Referring to FIG. 4, to counteract the pressure exerted by the elastic element (2) on each support shaft (13), produced by the tension of the elastic element (2) caused by its elongation, each of said support shafts (13) comprises a plurality of independent support shafts (13), supported one on top of the other. This configuration allows each support shaft (13) to withstand a greater pressure, by distributing said pressure over each independent support shaft (13). Additionally, this configuration allows avoiding increasing the diameter of the support shafts (13), that is, the area of its cross-section, which allows incorporating a greater number of said support shafts (13) within the device, which, in turn, allows a greater number of deviations in the direction of said elastic element (2), that is, this configuration allows using an elastic element (2) of greater length, which increases the total volume of the elastic element (2), therefore allowing a greater energy storage capacity.

For the understanding of the present disclosure, the expression "computing unit" refers to a device that processes data, for example, microcontrollers, microprocessors, DSCs (Digital Signal Controller), FPGAs (Field Programmable Gate Array), CPLDs (Complex Programmable Logic Device), ASICs (Application Specific Integrated Circuit), SoCs (System on Chip), PSoCs (Programmable System on Chip), computers, servers, tablets, cell phones, smart phones, signal generators and "control units/computing units/processing units" known to a person of ordinary skill in the art and combinations thereof.

In a preferred embodiment, and with reference to FIG. 2, the device comprises a revolution sensor (9) connected to the shaft (3) and to a computing unit (14). Said computing unit (14) may be connected to the locking element
(8) and to the transmission (6), which may be one or more computerized CVTs, connected in series. This configuration allows obtaining a data of the number of revolutions of the shaft (3), which in turn allows calculating the length of the elastic element (2) that is wound on the shaft (3). Said data of the number of revolutions is sent from the revolution sensor (9) to the computing unit (14). After the computing unit (14) has processed said data, it sends a configuration command when the elastic element (2) has completed its maximum elongation and the locking element (8) is activated, which allows the elastic energy to be stored for the necessary time, without the need to consume energy in the locking process.

Referring also to FIG. 2, in a preferred embodiment, the device comprises a voltage and current sensor (10) connected to the motor-generator (5) and connected to the computing unit (14). Said sensor takes data of the current consumed by the motor-generator (5) when it is configured as a motor, and of the voltage generated by the motor-generator (5) when it is configured as a generator. When the motor-generator (5) is configured as a motor, the current data is sent to the computing unit (14), and after the computing unit (14) has processed said data, a configuration command is sent to modify the ratio of rotation of the computerized CVT, that is, to modify the rotation speed of the motor-generator (5) with the objective that the motor is always working at its maximum efficiency. When the motor-generator (5) is configured as a generator, the voltage data is sent to the computing unit (14). After the computing unit (14) has processed said data, a configuration command is sent to modify the rotation ratio of the computerized CVT, that is, to modify the rotation speed of the motor-generator (5)in order to maintain the generated voltage constant, regardless of the required load.

With reference to FIG. 3, in another embodiment, the device further comprises an elongation sensor (11) connected to the elastic element (2) and to the computing unit (14), and disposed between the braking mechanism (4) and the shaft (3). The foregoing allows the elongation sensor (11) to obtain elongation data of the elastic element (2). This configuration allows determining if the segment of the elastic element (2), disposed between the braking mechanism (4) and the shaft (3), is in a state of maximum elongation, or the elongation that the elastic element (2) has at a given moment. According to said data, the computing unit (14) determines the action on the braking mechanism (4).

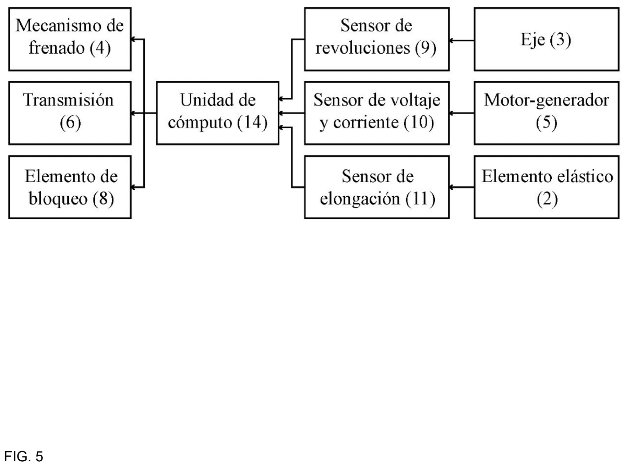

Additionally, referring to FIG. 5, in a preferred embodiment the device has a computing unit (14), as previously indicated, connected to the revolution sensor (9), to the voltage and current sensor (10), to the elongation sensors (11), to the braking mechanism (4), to the locking element (8), and to the transmission (6). The foregoing allows the computing unit (14) to control said braking mechanisms (4), the locking element (8) and the transmission (6), according to the data from each of said sensors (9, 10, 11). According to this configuration, the braking mechanism (4) opposes a winding direction of the elastic element (2) on the shaft (3) when said elastic element (2) is not elongated, and decreases the resistance as said elastic element (2) is elongated and close to its maximum elongation. In the same way, the locking element (8) is activated when the charging stage is finished, either because the elastic element (2) has reached its maximum elongation, or because there is no energy available in the electrical energy source.

In a preferred embodiment of the present disclosure, the motor-generator (5) is formed by an independent motor and generator. Said motor is selected from the group consisting of brushless motors, interior permanent magnet synchronous motors (IPMSM), reluctance motors, permanent magnet synchronous reluctance motors (IPM- SynRM), alternating current motors (e.g., three-phase synchronous motors, asynchronous motors, synchronized asynchronous motors, motors with a permanent magnet rotor, single-phase motors, two-phase motors, motors with auxiliary wound starting, motors with auxiliary wound starting and with capacitor), direct current motors (e.g., series excitation motors, parallel excitation motors, compound excitation motors). Similarly, the generator is selected from the group consisting of DC or AC generators, such as synchronous generator, asynchronous generator, squirrel cage generator, axial generator, induction generator, permanent magnet generator, excitation generator, shunt generator, compound generator.

According to the previous embodiment, when the motor-generator are independent mechanisms, the motor can be a direct current motor and the generator can be an AC generator. This configuration allows providing an inverter feature to the device, that is, it allows the energy source to be a direct current source (e.g., solar panels, batteries), and the device can be used as an electrical energy source to power alternating current equipment (e.g., household appliances that work with energy provided by the electrical grid), without the need to incorporate an energy inverter system.

Connected to the motor, the generator and the transmission (6), a clutch (15) can be provided. Said clutch allows coupling and/or decoupling the motor, the generator, and the transmission (6). This configuration allows providing a router or gateway feature to the device, that is, it acts as a connection point between the energy storage system and the other systems, which allows the energy to be directed either to the elastic element (2) to store the energy, or to the generator (5) to produce energy. This mechanism behaves like an electronic gateway, which is used to optimize the use of energy, allowing the battery to be charged with surplus energy while maintaining the required energy generation at the same time. This gateway mechanism can also be configured using one or several CVTs that allow a very large gear ratio, that is, they can be in the order of 1:250000.

In this way and according to the previous embodiment, the motor is used in the charging stage to stretch a plurality of elastic elements (2), causing them to be wound on the shaft (3) while the guide discs (12) guide each of elastic element (2).

For their part, the elongation sensors (11) acquire data on the elongation state of each elastic element (2), allowing for controlled elongation by acting on the braking mechanism (4). At the end of the charging stage, the locking element (8) is actuated by the computing unit (14), maintaining the state of deformation of the elastic elements (2).

In the discharge stage, the clutch is coupled to the generator. At the moment the locking element (8) is uncoupled, the elastic elements (2) begin a shape recovery process, generating a rotation of the shaft (3). The shaft (3) transmits said rotation to the generator, whose rotation speed is mediated by the transmission (6), allowing a stable electrical generation.

In one embodiment of the present disclosure, the computing unit (14) can be connected to both the motor- generator (5) and the clutch (15). The foregoing allows the computing unit (14) to exert a control action with respect to the motor-generator (5) and the clutch (15), which results in a closed-loop integration of all the components of the system.

In one embodiment of the present disclosure, the clutch allows the motor and generator to be coupled, which allows the device to function as an AC electricity source from any connected electrical source.

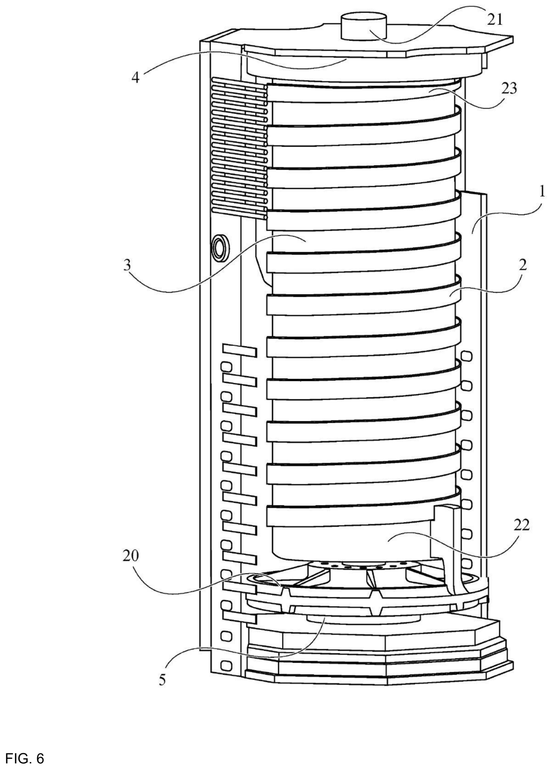

Referring to FIG. 6, in one embodiment of the disclosure, the device for storing energy comprises a structure (1) with a first end (20) and a second end (21) opposite the first end (20). Between the first end (20) of the structure (1) and the second end (21) of the structure (1) the shaft (3) is disposed. In one embodiment of the present disclosure, the second end (21) of the structure (1) may be at a higher height compared to the first end (20) of the structure (1). The foregoing allows the shaft (3) to be arranged vertically.

In this embodiment, the shaft (3) is a cylinder with a first end (22) and a second end (23). The first end (22) of the shaft (3) is connected to a first base and the second end (23) of the shaft (3) is connected to a second base. That is, the first end (22) of the shaft (3) is connected to the first base that is disposed at the first end (20) of the structure (1). For its part, the second end (23) of the shaft (3) is connected to the second base that is disposed at the second end (21) of the structure (1).

Referring to FIG. 6, the second end of the elastic element (2) is connected to the first end (22) of the shaft (3). In this embodiment, the shaft (3) is configured to rotate on the first end (20) and the second end (21) of the structure (1) so that the elastic element (2) is wound or unwound along the outer surface of the shaft (3). When the elastic element (2) is wound on the shaft (3), the elastic element (2) stores elastic energy. When the elastic element (2) is unwound, the elastic energy stored in the elastic element (2) is released as the shaft (3) or cylinder rotates.

The first end (22) of the shaft (3) is coupled to the first end (20) of the structure (1) which in turn is coupled to the motor generator (5) which is configured to rotate integrally with said shaft (3). When the motor generator (5) functions as a motor, which is the charging stage, the elastic element (2) is wound on the shaft (3), that is, on the cylinder. As the elastic element (2) is wound around the shaft (3), it elongates or stretches, storing elastic energy. When the motor generator (5) functions as a generator, which is the discharge stage, the elastic element
(2) unwinds, causing the shaft (3) to rotate, which allows the motor generator (5) to rotate in turn, to produce electrical energy.

On the other hand, between the first end (20) and the second end (21) of the structure (1) and around the shaft
(3) a plurality of bars can be arranged. In addition, said bars can be in contact with the outer surface of the shaft
(3). For example, around the shaft (3) and on the outer surface of said shaft (3) at least two bars are arranged, where said bars are connected between the first end (20) and the second end (21) of the structure (1). According to the foregoing, when the elastic element (2) is wound, said elastic element (2) is wound on the plurality of bars which allows distributing the force exerted on the shaft (3) eliminating the friction between the elastic element
(2) and the shaft (3). Since the force of the elastic element (2) can reach 10 tons, the number of bars can be increased to minimize the compression force on the shaft (3) which would deform said shaft (3). Therefore, when around the shaft (3), for example, 8, 16 or more bars are arranged. Said bars allow distributing the force exerted by the elastic element (2) which prevents the shaft (3) from deforming.

In addition, said bars may have rotation means connected at their ends which allow said bars to rotate. Additionally, when the shaft (3) is vertical, said bars are also vertical. Also, in an embodiment of the present disclosure, when the shaft (3) is vertical and the bars are also vertical, said bars can be rotating, that is, they can rotate on their own longitudinal axis. In an embodiment of the present disclosure, the bars are connected between the first base and the second base, and in addition, the rotation means are arranged between said bases and the bars. For example, the rotation means can be bearings that allow said bars to rotate on their longitudinal axis. That is, when the bars are vertical, their ends comprise rotation means configured for the bars to rotate on their longitudinal axis.

According to the foregoing, the bars that are arranged on the shaft (3) can rotate on their longitudinal axis when they are connected with rotation means, which allows the elastic element (2) to be wound on the cylinder with the bars arranged on its surface, without said elastic element (2) getting stuck or jammed due to the friction produced between said bars and the elastic element (2). That is, because the bars can rotate by the action of the rotation means. When the shaft (3) rotates, the plurality of bars arranged on the outer surface of the shaft (3) rotate integrally with said shaft. As said rotation occurs, the elastic element (2) is wound on the outer surface of the bars. When said elastic element (2) is wound on the plurality of bars, as said bars also rotate independently by the rotation means, the friction produced between the elastic element (2) and the bars is further reduced.

Likewise, the greater the number of bars, a polygon is generated around the shaft (3), where the number of vertices of said polygon is given by the number of bars. The number of sides of said polygon affects the compression on the shaft (3), in particular, with a greater number of sides the compression exerted by the elastic element (2) on the shaft (3) is reduced, with which, the shaft (3) can be made of a less dense material and therefore reduce its weight.

According to the embodiment described above, the device may have a braking mechanism (4) disposed between the second end (21) of the structure (1) and the second end (23) of the shaft (3) and in physical contact with the elastic element (2). As described above, the braking mechanism (4) allows controlling the elongation of the elastic element (2) as it is wound on the shaft (3).

In this embodiment the device may have a transmission (6) connected between the first end (22) of the shaft (3) and the motor-generator (5). In this embodiment the transmission (6) can be an electronic continuously variable transmission (eCVT - Electronic Continuous Variable Transmission). For the understanding of the present disclosure an eCVT is a CVT transmission with an electronic control system which comprises sensors that monitor the conditions of the motor generator and adjust the eCVT transmission to operate efficiently according to said conditions. As previously indicated, said transmission (6) controls the rotation speed of the shaft (3) with respect to the motor-generator (5).

### Examples

### EXAMPLE

**1** An energy storage device was designed with the following characteristics:
   - a rectangular prismatic structure (1) made of welded steel profiles;
   - an elastic element (2) corresponding to four 7m long rubber bands, with a rectangular profile of dimensions 50 mm x 5 mm;
   - a braking mechanism (4); and
   - a motor-generator (5) with a nominal power of 200 W at 200 RPM and an efficiency of 80%.

With this configuration, the bands reached their maximum elongation in 60 min. using a power of 100 W. The generation of 78 Wh was achieved in a period of 60 min.

### EXAMPLE 2

An energy storage device was designed according to FIGS. 2 and 3 with the following characteristics:
- a rectangular prismatic structure (1) made of welded steel profiles and covered by steel sheets;
- an elastic element (2) formed by five 38 m long rubber bands, with a rectangular profile of dimensions 130 mm x 30 mm;
- a braking mechanism (4) connected to each band of the elastic element (2), that is, five independent braking mechanisms (4);
- a motor-generator (5) with a nominal power of 3 KW at 200 RPM and an efficiency of 80%.
- a transmission (6) formed by two CVTs, each with a transmission ratio of 2:26;
- a locking element (8) formed by a ratchet;
- a revolution sensor (9);
- a voltage and current sensor (10);
- five elongation sensors (11), each connected to each band of the elastic element (2);
- ten guide discs (12) of 53 cm in diameter;
- 28 support shafts (13) formed by 84 independent shafts; and
- a computing unit (14).

With this configuration, it is estimated that the bands will reach their maximum elongation in a time of between 3 h and 6 h, using a power of between 2 KW and 4 KW, and a generation of between 9 and 11 KWh in a period of 4 h of discharge.

### EXAMPLE 3

An energy storage device was designed according to FIG. 6 with the following characteristics:
- An octagonal prismatic structure (1) made of welded steel profiles and covered by steel sheets;
- a shaft (3) with a first end (22) and a second end (23), disposed between the first end (20) and the second end (21) of the structure (1). The shaft (3) is a cylinder on which the elastic element (2) is wound;
- 16 bars arranged between the first end (20) and the second end (21) of the structure (1) and on the outer surface of the cylinder or shaft (3);
- bearings at the ends of the bars that allow the bars to rotate on their longitudinal axis;
- an elastic element (2) formed by a natural latex band 2.6 m long, with a rectangular profile of dimensions
   4.5 mm by 12.7 mm wound on the cylinder or shaft (3) and on the bars;
- a braking mechanism (4) connected to the elastic element (2);
- a motor-generator (5) with a nominal power of 5 W at 500 RPM and an efficiency of 90%;
- an electronic CVT transmission (6) formed by a stepper motor that controls the outer ring of the first planetary gear.

With this configuration, the bands reached their maximum elongation up to 13 m in a period of 20 minutes using a power of 5 W. With this configuration, the generation of 4.5 W was achieved in a period of 19 minutes.

It should be understood that the present disclosure is not limited to the described and illustrated embodiments, as it will be evident to a person skilled in the art that there are possible variations and modifications that do not depart from the spirit of the disclosure, which is only defined by the following claims.

## Claims

1. An energy storage device, comprising:
• a structure (1);
• an elastic element (2) with a first end connected to the structure (1);
• a shaft (3) connected to a second end of the elastic element (2). Said shaft (3) is coupled to the structure (1), where said shaft (3) is configured to rotate and wind or unwind the elastic element (2) on said shaft (3);
• a braking mechanism (4) disposed between the shaft (3) and the structure (1) in physical contact with the elastic element (2); and
• a motor-generator (5) connected to the shaft (3).

2. The device of Claim 1, wherein between the shaft (3) and the motor-generator (5) there is a transmission (6) comprising a first coupling point connected to a gear (7) disposed on the shaft (3), and a second coupling point disposed on the motor-generator (5), where said transmission (6) is configured to control the rotation speed of the motor-generator (5).

3. The device of Claim 2, wherein the transmission is a continuously variable transmission.

4. The device of Claim 3, wherein the shaft (3) is connected to a locking element (8), where said locking element
(8) is configured to stop the rotation of the shaft (3).

5. The device of Claim 4, wherein the shaft (3) comprises a plurality of guide discs (12), where said guide discs
(12) are arranged orthogonally to the shaft (3), and are distributed along said shaft (3).

6. The device of Claim 5, wherein a plurality of horizontally arranged support shafts (13) are disposed on the structure (1). Said support shafts (13) are in contact with the elastic element (2).

7. The device of Claim 6, wherein each support shaft (13) is in contact with a plurality of independent shafts and arranged one on top of the other.

8. The device of Claim 7, which further comprises:
• a revolution sensor (9) connected to the shaft (3);
• a voltage and current sensor (10) connected to the motor-generator (5);
• an elongation sensor (11) connected to the elastic element (2) disposed between the braking mechanism (4) and the shaft (3); and
• a computing unit (14) connected to the sensors (9, 10, 11), to the braking mechanism (4), to the locking element (8), and to the transmission (6).

9. The device of Claim 8, wherein the motor-generator (5) is comprised of an independent motor and generator.

10. The device of Claim 9, wherein a clutch (15) is connected to the motor, the generator and the transmission.

11. The device of Claim 1, wherein the structure (1) comprises a first end (20) and a second end (21) opposite the first end (20), wherein the shaft (3) is disposed between said ends (20, 21) and wherein the first end (20) is coupled to the motor generator (5), wherein the elastic element (2) is configured to be wound around the shaft (3).

12. The device of Claim 11, wherein around the shaft (3) and on an outer surface of said shaft (3) at least two bars are disposed, wherein said bars are connected between the first end (20) and the second end (21) of the structure (1).

13. The device of Claim 12, wherein the bars are vertical and at their ends comprise rotation means configured for the bars to rotate on their longitudinal axis.
